# EUROPEAN PATENT SPECIFICATION

(11) **EP 0 401 933 B1**
(45) Date of publication and mention of the grant of the patent: **31.08.1994**
(21) Application number: 90201434.9
(22) Date of filing: 05.06.1990
(51) Int. Cl.: H04N 11/00

(54) **Video signal receiving and processing system**
Video-Signalempfangs- und -verarbeitungssystem
Système de réception et de traitement d'un signal vidéo

(30) Priority: 09.06.1989 NL 8901472
(43) Date of publication of application: 12.12.1990
(73) Proprietor: Philips Electronics N.V., 5621 BA Eindhoven (NL)
(72) Inventor: Van Leeuwen, Pieter Gerrit, NL-5656 AA Eindhoven (NL)
(74) Representative: Kooiman, Josephus Johannes Antonius

(56) References cited:
- US-A- 4 660 073
- IEEE TRANSACTIONS ON CONSUMER ELECTRONICS, "1988 INTERNATIONAL CONFERENCE ON CONSUMER ELECTRONICS, PART 1", vol. 34, no. 3, August 1988, pages 560-564, New York, US; Y. NAGAOKA et al.: "High performance VTR based on the S-VHS format"
- SMPTE JOURNAL, vol. 94, no. 9, September 1985, pages 896-903, Scarsdale, US; L.J. THORPE et al.: "Super motion system"
- BRITISH KINEMATOGRAPHY SOUND AND TELEVISION SOCIETY JOURNAL, vol. 67, no. 4, April 1985, pages 160-173, London, GB; L. STRASHUN et al.: "The betacam range principles and overview"

## Description

The invention relates to a device for receiving a video signal including a luminance signal component and a chrominance signal component, which device has an input for the video signal.

The invention also relates to a device for processing a video signal including a luminance signal component and a chrominance signal component, which device has an input and an output for the video signal.

A video signal transmission system comprising a transmission device, and a receiver is described in Funktechnik 38 (1983), Vol. 5, pp. 208-212 in which the technique known as SCART connection for transmitting signals between a television receiver and external video apparatuses is described. The above-mentioned video signal processing device is constituted by a television receiver or a video recorder which can receive the video signal from another device as well as supply this signal to the device. In connection with the increasingly stricter requirements imposed on the resolution upon display, and hence on the bandwidth of the television signal, it has been found necessary that not only the video signal but also the composite signal components should be available. This results in the addition of a number of extra leads to the transmission lead in a monodirectional connection and even in a number of extra leads which is twice as large as in a bidirectional connector.

A device for receiving a video signal including a luminance signal component and a chrominance signal component, which device has an input for the video signal, a further input for one of said signal components and a signal combination circuit for obtaining the other one of said signal components, is known from IEEE Trans. on CE, 1988 Int. Conf. on CE, Part 1, Vol. 34, No. 3, August 1988. This known device requires two input terminals for receiving separate chrominance and luminance components and a separate third terminal for receiving a composite video signal.

It is an object of the invention to provide a video signal receiving and processing device in which fewer extra leads are required in the transmission lead.

In accordance with the invention the receiving device described above is characterized in that the first mentioned input and the further input are coupled to corresponding inputs of the signal combination circuit so as to obtain the other one of said signal components from the video signal and the one of said signal components.

In accordance with the invention the device for processing the video signal, including a luminance signal component and a chrominance signal component, which device has an input and an output for the video signal, a further input for one of said signal components, a signal combination circuit for obtaining the other one of said signal components, and a further output for the one of said signal components, is characterized in that the first mentioned input and the further input are coupled to corresponding inputs of the signal combination circuit so as to obtain the other one of said signal components from the video signal and the one of said signal components.

The invention is based on the recognition that the signal component which is not transmitted can be obtained in a very simple manner from the video signal and the transmitted signal component by means of a subtractor circuit in the receiving device according to the invention, if not only the video signal but also one of the said signal components is transmitted by the transmission device according to the invention.

The one, transmitted signal component may be either the luminance signal component or the chrominance signal component. However, the chrominance signal component is preferred for the following reason. During the transmission, amplitude and delay time differences will arise between the video signal and the one signal component, so that crosstalk errors of the signal component which has been transmitted on the component which has not been transmitted will be produced when regaining the signal component which has not been transmitted. It has been found that errors in the luminance signal component due to crosstalk of the chrominance signal component (the so-called cross-luminance errors) are less disturbing than errors in the chrominance signal component due to crosstalk of the luminance signal component (the so-called cross-color errors). It is therefore important to transmit and to receive the chrominance signal component so that it is not disturbed by the luminance signal component.

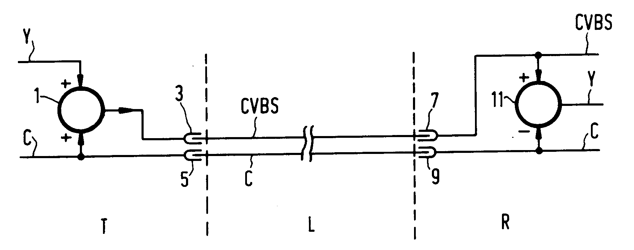

The invention will be described and elucidated by way of a non-limitative example with reference to the accompanying drawing showing a video signal transmission system according to the invention, while ignoring components which are not necessary for a satisfactory understanding of the invention.

In a transmission device T shown at the left in the drawing, a luminance signal component Y and a chrominance signal component C are added to obtain a video signal CVBS by an adder 1, which signal is applied to a first output 3 of the transmission device T. Moreover, the chrominance signal component C is applied to a second output 5 of the transmission device T.

A transmission lead L shown in the centre comprises a first lead for the video signal CVBS and a second lead for the chrominance signal component C. The first lead connects the output 3 of the transmission device T to a first input 7 of a receiving device R. The second lead connects the output 5 of the transmission device T to a second input 9 of the receiving device R.

In the receiving device R shown at the right, the video signal CVBS and the chrominance signal C are applied to a subtractor 11 for obtaining the luminance signal component Y which has not been transmitted from these transmitted signals.

A video signal processing device which must be able to receive and supply a video signal can be composed in a simple manner by means of the transmission device T and the receiving device R and is therefore not shown separately. In this case the (bidirectional) transmission lead comprises a lead pair for the video signal CVBS and a further lead pair for the chrominance signal component C.

## Claims

1. A device for receiving a video signal including a luminance signal component and a chrominance signal component, which device has an input for the video signal, a further input for one of said signal components and a signal combination circuit for obtaining the other one of said signal components, characterized in that the first mentioned input and the further input are coupled to corresponding inputs of the signal combination circuit so as to obtain the other one of said signal components from the video signal and the one of said signal components.

2. A receiving device as claimed in Claim 1, in which the one of said signal components is the chrominance signal component.

3. A device for processing a video signal including a luminance signal component and a chrominance signal component, which device has an input and an output for the video signal, a further input for one of said signal components, a signal combination circuit for obtaining the other one of said signal components, and a further output for the one of said signal components , characterized in that the first mentioned input and the further input are coupled to corresponding inputs of the signal combination circuit so as to obtain the other one of said signal components from the video signal and the one of said signal components.

4. A video signal processing device as claimed in Claim 3, in which the one of said signal components is the chrominance signal component.

## Patentansprüche

1. Anordnung zum Empfangen eines Videosignals mit einer Leuchtdichtesignalkomponente und einer Farbartsignalkomponente, und diese Anordnung enthält einen Eingang für das Videosignal, einen weiteren Eingang für eine der Signalkomponenten und eine Signalverknüpfungsschaltung zum Erhalten der anderen der Signalkomponenten, dadurch gekennzeichnet, daß der erstgenannte Eingang und der weitere Eingang mit entsprechenden Eingängen der Signalverknüpfungsschaltung gekoppelt sind, um die andere der Signalkomponenten aus dem Videosignal und die eine der Signalkomponenten zu erhalten.

2. Empfangsanordnung nach Anspruch 1, in der die eine der Signalkomponenten die Farbartsignalkomponente ist.

3. Anordnung zum Verarbeiten eines Videosignals mit einer Leuchtdichtesignalkomponente und einer Farbartsignalkomponente, wobei die Anordnung einen Eingang und einen Ausgang für das Videosignal, einen weiteren Eingang für eine der Signalkomponenten, eine Signalverknüpfungseinheit zum Erhalten der anderen der Signalkomponenten, und einen weiteren Ausgang für die eine der Signalkomponenten enthält, dadurch gekennzeichnet, daß der erstgenannte Eingang und der weitere Eingang mit entsprechenden Eingängen der Signalverknüpfungsschaltung gekoppelt sind, um die andere der Signalkomponenten aus dem Videosignal und die eine der Signalkomponenten zu erhalten.

4. Videosignalverarbeitungsanordnung nach Anspruch 3,worin die eine der Signalkomponenten die Farbartsignalkomponente ist.

## Revendications

1. Dispositif de réception d'un signal vidéo comprenant une composante de signal de luminance et une composante de signal de chrominance, ledit dispositif ayant une entrée pour le signal vidéo, une autre entrée pour l'une desdites composantes de signal et un circuit de combinaison de signaux pour obtenir l'autre desdites composantes de signal, caractérisé en ce que la première entrée mentionnée et l'autre entrée sont couplées à des entrées correspondantes du circuit de combinaison de signaux de manière à obtenir l'autre desdites composantes de signal à partir du signal vidéo et de la première desdites composantes de signal.

2. Dispositif récepteur selon la revendication 1, dans lequel la première desdites composantes de signal est la composante de signal de chrominance.

3. Dispositif de traitement de signal vidéo comprenant une composante de signal de luminance et une composante de signal de chrominance, ledit dispositif ayant une entrée et une sortie pour le signal vidéo, une autre entrée pour l'une desdites composantes de signal, un circuit de combinaison de signaux pour obtenir l'autre desdites composantes du signal, et une autre sortie pour la première desdites composantes de signal, caractérisé en ce que la première entrée mentionnée et l'autre entrée sont couplées à des entrées correspondantes du circuit de combinaison de signaux de manière à obtenir l'autre desdites composantes de signal à partir du signal vidéo et de la première desdites composantes de signal.

4. Dispositif de traitement de signaux vidéo selon la revendication 3, dans lequel la première desdites composantes de signal est la composante de signal de chrominance.
